# EUROPEAN PATENT APPLICATION

(11) **EP 4 730 221 A1**
(43) Date of publication of application: **22.04.2026**
(21) Application number: 24207658.6
(22) Date of filing: 18.10.2024
(51) Int. Cl.: G06Q 10/04

(54) **MANUFACTURING SYSTEMS AND METHODS**

(71) Applicant: Zero London Ltd, Berkhamsted HP4 1RH (GB)
(72) Inventor: Betts,, Nicholas James, Berkhamsted, HP4 1RH (GB)
(74) Representative: Potter Clarkson

(57) **Abstract**

A computer-implemented method (100) for preparing a manufacturing plan, comprising: receiving (102) plan template data defining a plan template; receiving (104) pattern data defining a plurality of patterns; processing the plan template data and pattern data to generate (106) initial plan data, the initial plan data defining an initial pattern arrangement on the plan template; generating (108) a plan efficiency score based on the initial plan arrangement; and generating (110) a pattern adjustment recommendation for modifying the pattern data by reference to the initial plan data and the plan efficiency score.

## Description

### FIELD

The invention relates to systems and methods for preparing manufacturing plans for industrial manufacturing.

### BACKGROUND

Manufacturing processes in many industries involve cutting a component out of a larger workpiece, or otherwise converting a portion of the workpiece into a component. For example, in the fashion industry, clothes are typically designed and manufactured by cutting shapes out of sheets of fabric, and then stitching the shapes together into garments. Plans are used to guide the cutting of the sheets. Each plan may contain multiple shapes to be cut.

When the sheets are cut, the spaces between shapes become offcuts. These offcuts are often damaged or too oddly-shaped to be re-used, and often become waste. It has been estimated that the fashion industry alone creates around 60 billion square meters of wasted fabric each year, at an annual cost of around $20 billion. Not only is this inefficient, but significant carbon emissions are generated in transporting, processing, and then disposal of this unused material.

Accordingly, there is a need for more efficient and environmentally methods for industrial manufacturing.

### SUMMARY OF THE INVENTION

According to a first aspect, there is provided a computer-implemented method for preparing a manufacturing plan, comprising: receiving plan template data defining a plan template; receiving pattern data defining a plurality of patterns; processing the plan template data and pattern data to generate initial plan data, the initial plan data defining an initial pattern arrangement on the plan template; generating a plan efficiency score based on the initial plan arrangement; and generating a pattern adjustment recommendation for modifying the pattern data by reference to the initial plan data and the plan efficiency score.

Each pattern represents a geometry and potentially other parameters of a component to be cut from a workpiece. The initial plan represents an initial arrangement of the patterns so that multiple components can be cut from a single workpiece or during a single manufacturing step. In the fashion, textile and furnishing industries, the plan may be termed a layplan or marker.

The plan efficiency score represents the quality of the initial plan or of subsections of the initial plan. In some examples, the plan efficiency score may represent the ratio of used vs wasted material in the workpiece. For example, the plan efficiency score may comprise a ratio of the material which will be used in components defined by the patterns in the plan, vs. the ratio of material which will be converted into wasted offcuts. The plan efficiency score may also represent the fraction of the workpiece which will be converted into components.

The pattern adjustment recommendation provides a recommendation for modifying one or more of the patterns in the pattern data. By generating the pattern adjustment recommendation with reference to the plan efficiency score, the geometry or other parameters of a patten can be adjusted to improve the overall efficiency of the manufacturing plan. For example as will be explained herein, the recommendation may comprise a suggestion for how to modify the geometry of a pattern to allow that pattern to fit more neatly with other patterns into a plan, thereby creating a modified plan with a higher pattern efficiency score.

In some examples multiple initial plans may be generated, each having different criteria, and a preferred initial plan may be selected automatically or by a user.

The method may be implemented using machine learning methods. For example, a first machine learning method may be used to generate the initial plan(s), that is, to determine how to arrange the patterns defined by the pattern data. A second machine learning method may then used to process each initial plan, and identify pattern adjustment recommendations. This approach allows different machine learning methods to be optimised for each task.

In an embodiment, generating the plan efficiency score and pattern adjustment recommendation comprises: identifying an improvement region in the initial pattern arrangement; and generating the pattern adjustment recommendation by reference to the identified improvement region.

Improvement regions are regions of the initial plan which negatively impact the plan efficiency score. The pattern adjustment recommendation may be generated to improve or remove the improvement region, thereby increasing the plan efficiency.

In an embodiment, identifying an improvement region comprises identifying an overlap region between adjacent patterns in the arrangement. An overlap region is a region of the arrangement in which two or more adjacent patterns overlap in space. Conventional approaches for generating plans may not even consider arrangements with overlap regions, as any patterns in the overlap region cannot actually be manufactured. By considering overlap regions as improvement regions, the method can consider arrangements in which the patterns "nearly" fit, and then provide recommendations for how to modify one or more patterns so that the patterns do fit.

In an embodiment, identifying an improvement region comprises identifying a waste region between adjacent patterns in the arrangement. A waste region is a region of the plan template which does not comprise a pattern, and which, when the workplace is manufactured, will be converted into waste. For example, a waste region may be too small, too large, or have too irregular a geometry to be easily reused or recycled. Methods for recycling textiles are known, such as textile fibre reclamation processes, but such methods are generally resource intensive, and may not be compatible or financially viable for more diverse fibre compilations. By modifying patterns according to the pattern adjustment recommendation, the waste regions may be converted into regions which can be re-used, or the modified parameters of the patterns may allow them to be fitted together with no waste region or a smaller waste region.

The method may involve looking for both overlap regions and waste regions.

In an embodiment, the pattern adjustment recommendation modifies the pattern data so as to modify a size of the improvement region, and optionally to reduce the size of the improvement region. Rather than simply reducing the size of the improvement region, the method may alternatively or additionally otherwise modify the improvement region. For example, the pattern adjustment method may change an aspect ratio or other geometric property of an improvement region, resulting in an offcut which may be easier to re-use. In some examples, it may even be optimal to increase the size of the improvement region, particularly where the improvement region represents a "waste" region rather than an overlap region.

In an embodiment, the pattern adjustment recommendation comprises a recommendation for modifying geometry of a pattern defined by the pattern data. Modifying the geometry of a pattern may allow the pattern to be arranged together with other patterns to form a more efficient plan.

In an embodiment, the pattern data comprises: geometry data representing geometrical features of each of the plurality of patterns; and adjustability parameters representing an adjustability level of each of the geometrical features, and wherein the pattern adjustment recommendation is generated with reference to the adjustability parameters. Each adjustability parameter may relate to a pattern or to a geometrical feature of a pattern, such as a particular edge of its shape. The adjustability parameters determine how adjustable each geometrical feature is. The pattern adjustment recommendation may recommend modifying geometrical features with higher adjustability parameter value preferentially and/or to a physically greater extent than geometrical features with a lower adjustability parameter. This allows a pattern designer to control whether and how recommendations are generated for different patterns and parts of patterns.

In an embodiment, the adjustability parameters categorise geometrical features as fixed or unfixed, and the pattern adjustment recommendation comprises a recommendation for modifying an unfixed geometrical feature. Conversely, there will be no recommendation for modifying fixed geometrical features. This allows a pattern designer to differentiate between key geometrical features which cannot be modified, and less key features where geometrical modification is acceptable. Specifying geometrical features as fixed may also reduce processing time, as the method may not even need to consider modifying fixed geometrical features and can focus on analysing the unfixed features.

In an embodiment, the method further comprises modifying the pattern data in accordance with the pattern adjustment recommendation. That is, the method may automatically modify the pattern data in accordance with the pattern arrangement modification, for example, to display a preview of the modified pattern on a display device for approval or further modification by a designer. The method may further comprise processing the plan template data and modified pattern data to generate modified plan data, the modified plan data defining a modified pattern arrangement on the plan template. The modified pattern arrangement or metrics representing it (such as its calculated plan efficiency score) may also be displayed to a designer on a display device, enabling them to understand the improvement provided to the overall plan if the pattern adjustment recommendation is followed.

In an embodiment, the method further comprises generating display instructions for causing the pattern adjustment recommendation to be displayed on a display device, and optionally for causing the pattern adjustment recommendation to be displayed overlaid over the pattern arrangement according to the initial plan data. The pattern adjustment recommendation may be displayed on a display device to allow a designer to approve the modification or make further modifications using a user interface device.

In an embodiment, the plan is for guiding manufacturing operations onto a workpiece, and the plan template data comprises workpiece data representing material properties of the workpiece. Material properties of the workpiece may include, for example, the type of material, grain direction, weave direction, or information about surface patterning such as colour and size. Providing the workpiece data may allow the initial plan to be generated with reference to the material properties of the workpiece. For example, aligning patterns along a particular weave direction may result in garment components with better material and/or aesthetic properties.

In an embodiment, the workpiece comprises a sheet of flexible material, such as fabric or a textile. In such examples, the patterns may correspond to components of furniture, furnishings, or upholstery. However, the workpiece may also be a comparatively rigid material, such as a sheet or block of metal, plastic, silicone, or wood. In such examples, the patterns may correspond to rigid components, such as body panels for vehicles.

In an embodiment, the method further comprises: receiving an efficiency target; and generating the pattern adjustment recommendation for modifying the pattern data by reference to the plan efficiency score and the efficiency target. The efficiency target may determine the desired plan efficiency score, or desired plan efficiency improvement. Thus, the efficiency target allows the "strength" of the pattern adjustment recommendation to be controlled. If the efficiency target (or, in some examples, the difference between the plan efficiency score and the efficiency target) is low, then the pattern adjustment recommendations will be comparatively minor, but as the efficiency target increases, so does the number of recommendations and the magnitude of the recommended adjustment.

The method is suitable for use in 2D manufacturing, in which a component is cut from a substantially thin sheet. However, it will be appreciated that the method may also be applied to 3D manufacturing methods such as CNC lathing. In such examples, the patterns define 3D volumes arranged within a virtual plan. A manufacturing method follows the plan to cut components in the shape of the patterns out of a workpiece.

According to a further aspect, there is provided a storage medium containing instructions that, when executed by a processor, cause the processor to perform the method of the first aspect.

According to a further aspect, there is provided a data processing apparatus comprising a processor configured to receive instructions from the storage medium of the preceding aspect.

According to a further aspect, there is provided a system for preparing a manufacturing plan, comprising: a receiver for receiving plan template data defining a plan template and pattern data defining a plurality of patterns; a plan generator for processing the plan template data and pattern data to generate initial plan data, the initial plan data defining a pattern arrangement on the plan template; a plan evaluator for generating a plan efficiency score based on the initial plan data; and a recommendation generator for generating a pattern adjustment recommendation for modifying the pattern data by reference to the plan efficiency score.

According to a further aspect, there is provided a computer-implemented method for preparing a manufacturing plan, comprising: receiving plan template data defining a plan template; receiving pattern data defining a plurality of patterns; processing the plan template data and pattern data according to a first set of plan configuration parameters to generate a first initial plan, the first initial plan data defining a first pattern arrangement on the plan template; processing the plan template data and pattern data according to a second set of plan configuration parameters to generate a second initial plan, the second initial plan defining a second pattern arrangement on the plan template different to the first pattern arrangement; and selecting one of the first and second initial plan in response to selection instructions.

The method may further comprise displaying the plan template data on a display device and receiving selection instructions from a user interface device.

### BRIEF DESCRIPTION OF THE DRAWINGS

Figure 1 is a flowchart illustrating an exemplary method.
Figure 2 illustrates an exemplary user display/interface device configured to allow a user to view and edit exemplary pattern data.
Figure 3 graphically illustrates steps of an exemplary method. Figure 3A shows initial pattern data and initial template data. Figure 3B and Figure 3C show initial pattern arrangements. Figure 3D shows the initial pattern arrangement of Figure 3C identifying improvement regions. Figure 3E shows a modified pattern arrangement generated in accordance with a pattern adjustment recommendation.
Figure 4 shows an exemplary manufacturing setup utilising an exemplary manufacturing plan.
Figure 5 shows a non-transitory storage medium
Figure 6 shows an system for implementing an exemplary method.

### DETAILED DESCRIPTION

As used herein, a "plan" refers to a manufacturing plan which is used to guide a manufacturing process. A plan is created by arranging patterns on a template. The patterns define the geometry and other patterns of the components to be cut (or otherwise manufactured), and the template defines the "blank sheet" of the plan, such as the geometry in which patterns can be arranged.

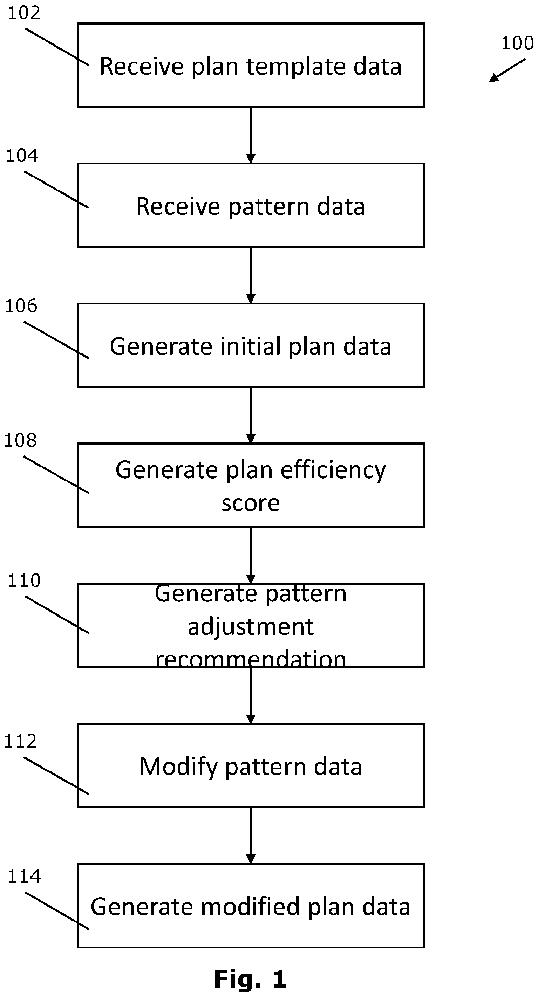

An exemplary method 100 for preparing a manufacturing plan is shown in Fig. 1. The method 100 may be performed by a computer or other data processing device. A data processing device (or "processing device") according to the present disclosure may be any suitable electronic data processing device. In some examples, a processing device may comprise one or more processors configured to execute instructions, and a computer memory configured to store information that may include instructions for execution by the one or more processors. The computer memory may be integrated with the data processing device and/or may be an external storage device; such terms and the term "storage memory" may be used interchangeably in this disclosure.

Step 102 comprises receiving plan template data defining a plan template, and step 104 comprises receiving pattern data defining a plurality of patterns. The plan template data and/or the pattern data may be received by retrieving it from storage memory connected to, or integral with, the processing device. Alternatively, or additionally, data may be received from a remote location. The plan template data may include parameters such as the size of the template. The pattern data may comprise data defining the geometry and, optionally, other parameters of one or more patterns. The pattern data and plan template data define the geometry of the template and each of the patterns, but do not define the position of the patterns relative to the plan template and to each other. In some cases the plan template data and pattern arrangement data may be provided together. For example, the pattern data may comprise one or more patterns arranged relative to a canvas.

Step 106 comprises processing the plan template data and pattern data to generate initial plan data, the initial plan data defining an initial pattern arrangement on the plan template. Arranging arbitrary shapes within an area or volume is a variant of the NP-Hard packing problem, and may be performed using conventional packing algorithms. Alternatively, a machine learning method may be used to generate the initial plan data. In such an approach, a machine learning model may be pre-trained, with the trained model being used to generate the initial plan data.

As will be described herein, unlike conventional packing optimisation approaches, the initial plan data may be generated such that patterns overlap or are otherwise less-optimally arranged. In some examples, the total area defined by the patterns may be substantially larger than the area defined by the plan template. In such cases, a pattern may be removed or ignored from the pattern data, such that the remaining patterns can fit into the template. Alternatively, or additionally, an alert may be generated. Conversely, the total area defined by the patterns may be substantially smaller than the area defined by the plan template. In such cases, patterns may deliberately be duplicated from the plan data to provide more efficient usage of the plan template. Alternatively, or additionally, an alert may be generated.

In some examples, multiple initial plans may be generated, and an initial plan is selected by a designer or automatically selected according to selection criteria.

Step 108 comprises generating a plan efficiency score based on the initial plan data. In some example, this plan efficiency score may be compared to an efficiency target. In such examples, if the plan efficiency score meets or exceeds the efficiency target, then the initial plan may be considered adequate. In some examples, the plan efficiency score may be a single value such as the percentage of the template covered by patterns. In other examples, the plan efficiency score may be a multivariate score generated from various metrics, such as by identifying the location and characteristics of all the improvement regions in the initial pattern arrangement.

Step 110 comprises generating a pattern adjustment recommendation for modifying the pattern data, by reference to the initial plan data and the plan efficiency score. In examples where the plan efficiency score is a single value, the pattern adjustment recommendation may be generated by reference to the plan efficiency score, in the sense that the plan efficiency score determines whether a recommendation should be generated at all. In other examples where the plan efficiency score is a multivariate score, the values of the plan efficiency score may influence where and how the pattern adjustment recommendation is generated. A machine learning and/or regression method may be used to identify candidate patterns, and/or candidate parameters of those patterns.

Step 112 comprises modifying the pattern data in accordance with the pattern adjustment recommendation. In some examples, instructions may be generated for displaying the modified pattern data to a designer on a display device. This may allow the designer to review and approve the pattern adjustment recommendation. Alternatively, or additionally, the modified pattern data may be approved automatically.

Step 114 comprises processing the plan template data and modified pattern data to generate modified plan data, the modified plan data defining a modified pattern arrangement on the plan template. That is, the patterns (both modified and unmodified) are rearranged if necessary to form a new pattern arrangement. In some examples, the modified plan data may be determined using the same systems and methods as were used in step 106 to generate the initial plan data. In some examples, the modified plan data may be processed to generate a new plan efficiency, thereby to determine whether, and to what extent, the modification has provided an improvement in the plan efficiency.

In some examples, steps 106-114 may be performed iteratively until a sufficiently high plan efficiency score is reached. That is, patterns are modified, either successively or trying different alternatives, until the resulting pattern arrangement is sufficiently optimised. The sufficiency of the plan efficiency score and/or the level of optimisation may be determined automatically, for example by reaching a threshold value, or may be determined manually by a user.

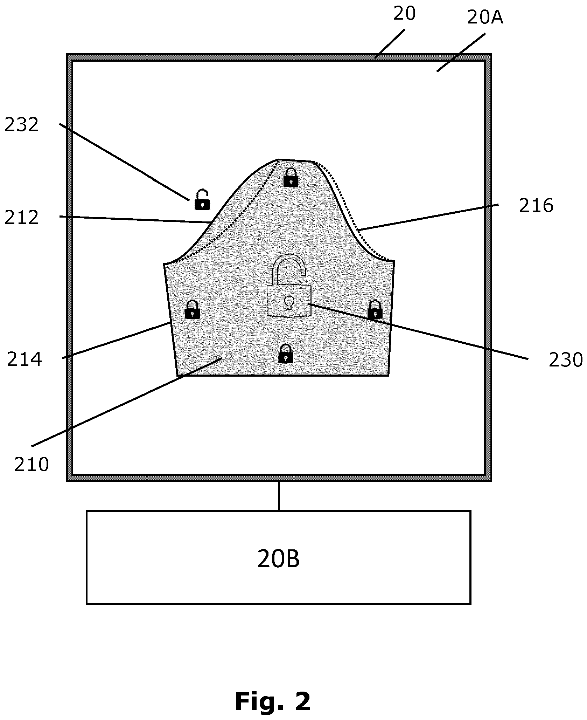

Figure 2 shows an exemplary display/interface device 20 comprising a display element 20A. The display/interface device 20 may be a computer, smartphone, printer, or any other device capable of displaying an information to a user. The display device 20 is configured to display pattern data. In this example, the pattern data comprises geometrical data defining the geometry of a single pattern 210. The display/interface device 20 comprises a user interface device 20B allowing a designer to provide inputs to design and modify parameters the pattern 210.

The pattern 210 has a geometry defined by a plurality of curved and/or straight edges 212, 214. A designer can modify the pattern 210 by moving the position of the edges 212, 214, adding or removing edges, and other operations.

The user interface 20B may provide the designer with tools for editing the pattern 210, such as:
- a live mirror tool allowing a selected pattern to be mirrored along a desired axis in real time;
- a live fill tool which converts unoccupied space into a pattern piece, thereby quickly and easily utilising blank space and encouraging new idea generation through randomisation;
- a live cut tool which allows patterns in the pattern to be virtually cut out and displayed joined together thereby supporting fluid design exploration by removing any unnecessary steps that slow down the user experience.

A designer may also use the user interface 20B configure other parameters of a pattern, such as: the name of the pattern/component; the number of desired copies of the pattern in the pattern arrangement; production markings such as notches; desired orientation of the pattern on a grainline or surface pattern of a workpiece; and/or seam allowance.

Each edge 212, 214 of the pattern has an associated adjustability parameter 232. In this example, the adjustability parameter 232 is a binary fixed/unfixed value. This is represented to the designed by a padlock icon, with a locked padlock indicating a fixed edge 214, and an unlocked padlock indicating an unfixed edge 212. A subsequent pattern adjustment recommendation may provide a recommendation to modify the geometry of an unfixed edge 212, for example to create a new edge geometry 216.

The pattern 210 has an associated global adjustability parameter 230. When this parameter is set to "fixed", no edges or other parameters of the pattern 210 may be modified in response to a pattern adjustment recommendation.

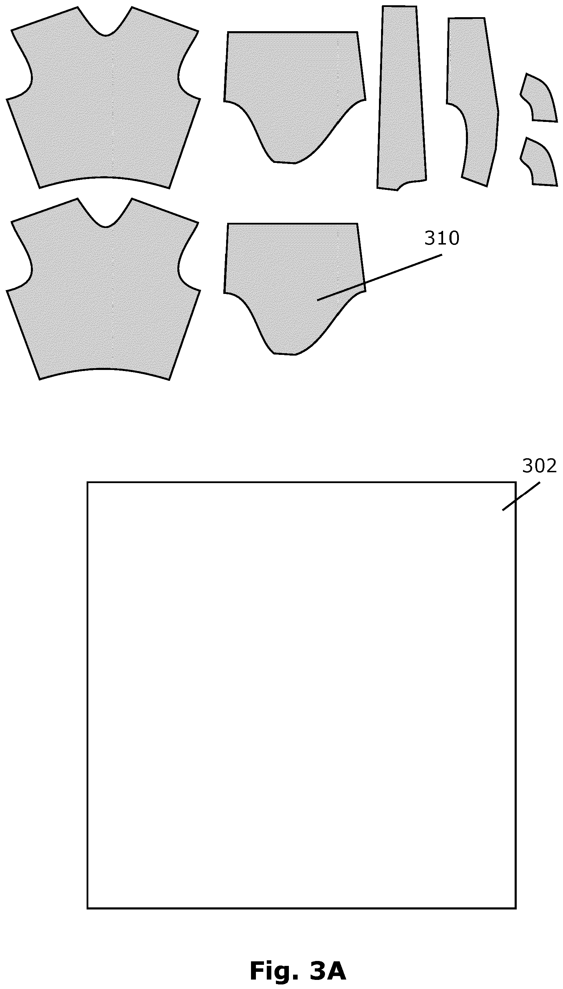

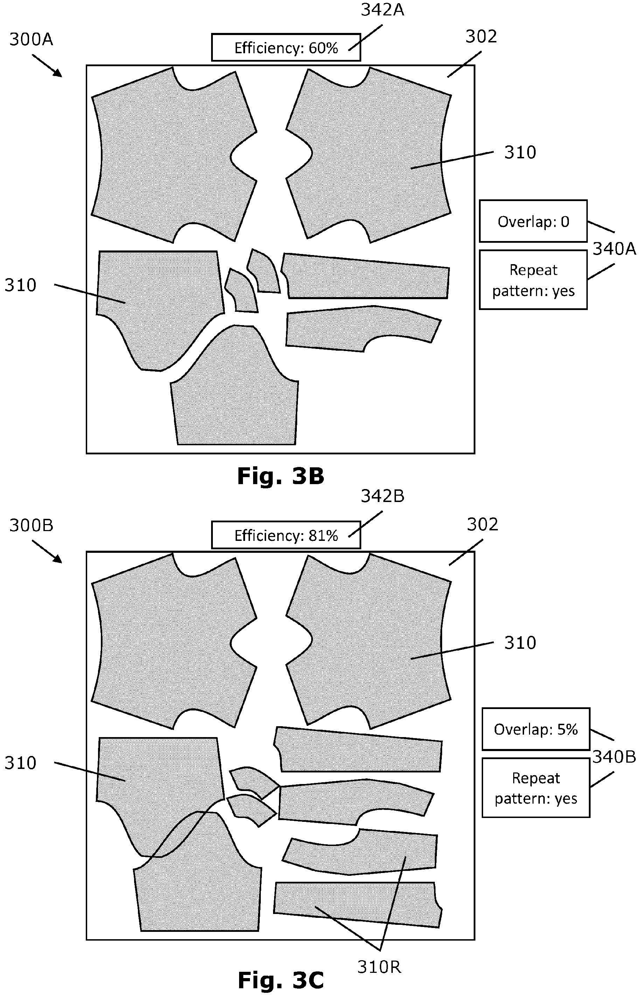

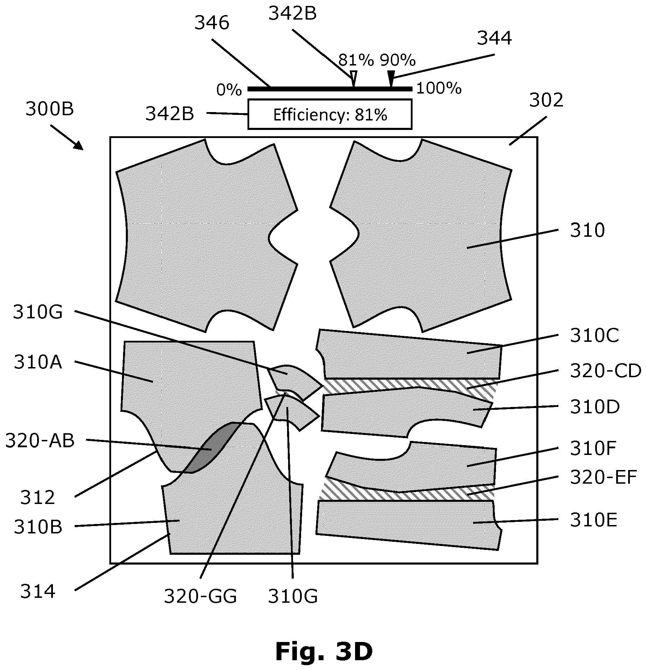

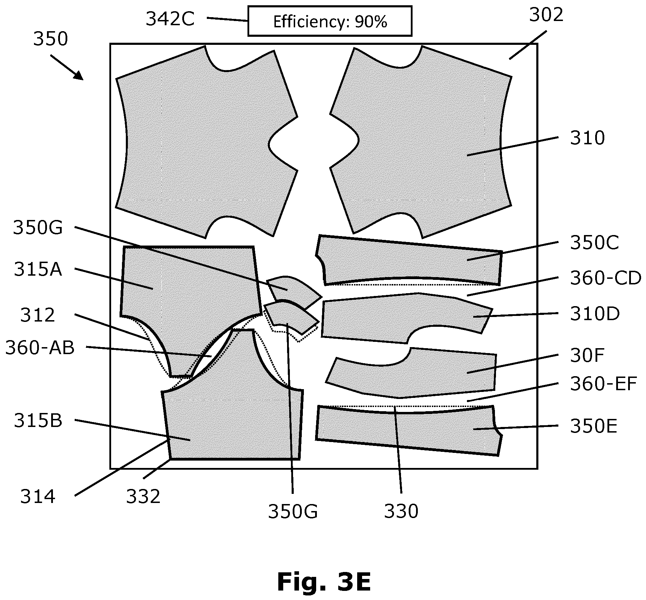

An example of a suitable method for generating a pattern adjustment recommendation will be described in relation to Figure 3.

Figure 3A shows pattern data defining a plurality of patterns 310, and plan template data defining a plan template 302. The plan template 302 also comprises workpiece data. In this case, the dimensions of the plan template 302 are the same as the exterior dimensions of the workpiece for which the final plan is intended for use.

The plan template data and pattern data are processed to create initial plan data. In this example, two sets of initial plan data are created, each representing a different initial arrangement of the patterns 310. The initial arrangement of the patterns 310 may specify the relative positioning and orientation of patterns 310 on the plan template 302. The first initial pattern arrangement 300A is shown in Figure 3B, and the second initial pattern arrangement 300B is shown in Figure 3C. In some examples, the designer can control the number of sets of initial plan data which will be created. For example, the user may set a time period for generating sets of initial plan data, and then new sets of initial plan data are continuously generated and stored until the time period expires.

The first and second initial plans are generated according to different sets of plan configuration parameters 340A, 340B. The plan configuration parameters may be received from storage, or they may be generated as part of the method. For example, several sets of plan configuration parameters may be generated randomly or according to a formula. In this example, the configuration parameters comprise two values: "Overlap", controlling whether patterns 310 in a pattern arrangement 300 may overlap; and "Repeat Patterns" controlling whether patterns 310 in a pattern arrangement 300 may be repeated if there is sufficient remaining space on the template 302 once the template 302 has been populated with all the patterns 310 defined by the pattern data. The first initial pattern arrangement 300A is generated such that patterns 310 do not overlap and patterns are not repeated, as specified by the first set of configuration parameters 340. The first initial pattern arrangement 300A is generated such that patterns 310 may overlap by up to 5% of their area, and the extra space on the template 302 is filled with repeated patterns 310R, as specified by the second set of configuration parameters 340.

In other examples, one or more initial pattern arrangements 300 may be generated manually by a designer. For example, a designer may use a production interface on the user display/interface device 20 to "drag and drop" patterns into an initial pattern arrangement on the plan template. The production interface may provide tools to assist the user in generating the initial pattern arrangement, such as tools enabling: pattern flipping; pattern rotation; pattern moving; pattern deletion, and/or image overlay (allowing images to be overlayed on the interface to inform pattern placement).

The initial pattern arrangements, 300A 300B of the sets of initial plan data are then processed to generate plan efficiency scores 342A, 342B. In this case, the plan efficiency score is generated by identifying improvement regions 320 in the initial pattern arrangements 300B, 300C as will be shown in Figure 3D. The first pattern arrangement 300A has a plan efficiency score 342A of 60%, while the more densely packed second pattern arrangement 300B has a plan efficiency score 342B of 81%.

In this example, the second initial pattern arrangement 300B is selected, and the second initial plan data is used as the initial plan data.

Once the initial pattern arrangement has been selected, an efficiency target 344 may be supplied, which may specify the targeted efficiency score. The efficiency target 344 may be determined automatically, or alternatively it may be specified by a designer. For example, a sliding scale 346 may be displayed to the designer showing the current efficiency score 342B of the initial pattern arrangement 300B. The designer can provide instructions to specify a desired efficiency target 344 (in this case, 90%). The difference between the efficiency target 344 and the current efficiency score 342 may determine the "strength" of the subsequently calculated pattern adjustment recommendation, that is the number and severity of alterations which may be recommended.

As shown in Figure 3D, improvement regions 320 in the initial pattern arrangement 300B may be identified by processing the initial pattern arrangement 300B to identify overlap regions where adjacent patterns 310 overlap, such as overlap region 320-AB where patterns 310A, 310B overlap. In this example, patterns 310A, 310B has the same geometry and associated adjustability parameters as the pattern 210 in Figure 2, with fixed edges 314 and unfixed edges 312.

Improvement regions 320 may also be identified by identifying waste regions between adjacent patterns 310, such as the waste region 320-CD between adjacent patterns 310C, 310D, the waste region 320-EF between adjacent patterns 310E, 310F, and the waste region 320-GG between adjacent patterns 310G, 310G (pattern 310G is duplicated). In this example, each of the waste regions 320-CD, 320-EF, 320-GG narrows along its width, meaning that once the patterns 310 have been cut out on the workpiece, these regions of the workpiece will be difficult to re-use.

The plan efficiency score 342 may alternatively or additionally comprise values representing the position, geometry, and/or type of each improvement region 320, as well as the patterns 310 adjacent to each improvement region 320.

A pattern adjustment recommendation is generated as by reference to the pattern efficiency score, i.e. in this case with reference to the improvement regions 320. The pattern adjustment provides a recommendation for modifying the initial pattern data so as to improve the plan efficiency score from the initial plan efficiency score 342 towards the desired efficiency target 344. The modified pattern data is re-processed to generate a modified pattern arrangement 350, shown in Figure 3E. The modified pattern arrangement 350 has a new pattern efficiency score 342C (in this case 90%), thereby reaching or exceeding the desired efficiency target 344. This modified pattern arrangement 350 may be displayed to the designer via a display device, to enable the designer to visualise the proposed modifications to the patterns and the pattern arrangement.

In this example, the pattern adjustment recommendation comprises a recommendation to modify the geometry of the patterns 310A, 310B (specifically, the geometry of the unfixed edges 312 so as to remove the overlap region 320-AB, replacing it with a free space region 360-AB. There is no recommendation to modify the geometry of the fixed edges 314. To assist the designer in identifying the recommendation, the modified patterns 350A, 350B modified according to the pattern adjustment recommendation are superimposed over or next to the unmodified profile 312 of the original patterns 310A, 310B, thereby allowing a designer to more easily understand the recommendation.

The pattern adjustment recommendation also comprises a recommended modification for modifying the geometry of patterns 310C, 310E. The geometry of the modified patterns 350C, 350E has been adjusted according to the recommendation such that their geometry more closely corresponds to their respective adjacent patterns 310D, 310F. This means that the regions 360-CD, 360-EF between the adjacent patterns no longer narrow along their width, allowing them to be more easily removed.

In some examples, it may be possible to reduce the size of an improvement region 320 or even remove the improvement region 320 altogether. For example in the case of the duplicated patterns 310G, the geometry of the pattern 310G has been modified so that the opposite sides of the pattern 310G have matching curves. This allows the pattern 310G to be fitted exactly against itself in the modified pattern arrangement 350, with no waste region at all in between.

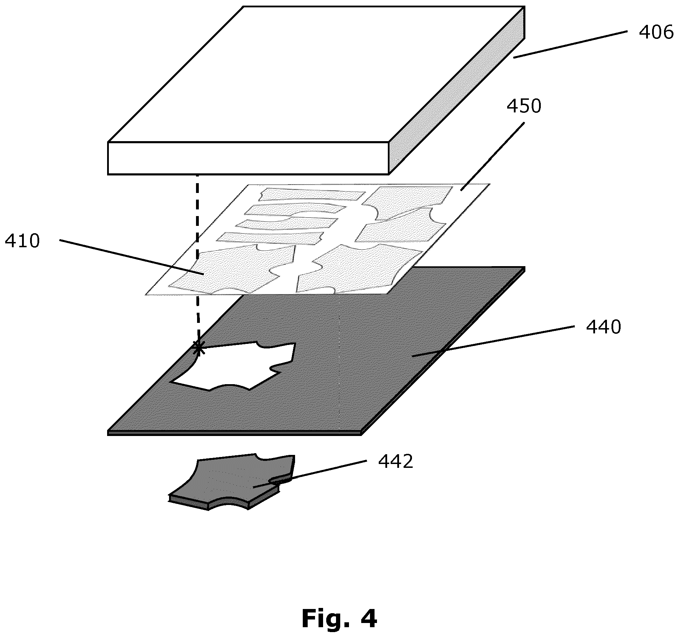

Figure 4 illustrates how a plan generated in accordance with the invention may be used for manufacturing.

A workpiece 440 is positioned to be cut by a cutting machine 406, such as a cutting blade, waterjet cutter, laser cutter, scissors, etc. A manufacturing plan 450, such as the modified plan comprising the modified pattern assembly 350 in Figure 3E, is provided to guide cuts made by the cutting machine 406. By cutting the workpiece 440 according to the plan template 400, components 442 can be cut from the workpiece 440 in the shape of the patterns 410 on the plan 450. In some cases, the plan 450 may be physically present. For example, the plan template 400 may be printed (e.g., on a 1:1 scale sheet of printed paper) or cut onto a manufacturing jig, or projected onto the workpiece by a projector. This may be particularly advantageous when the cutting machine is being manually controlled by a human operator. In other examples, the plan template 450 may entirely virtual. For example, the plan 450 may be stored in memory accessible to a processor, such that the processor can cause an automated cutting machine 406 to make cuts according to the plan 450.

The plan template data used to generate the plan 450 may comprise workpiece data, relating to the workpiece 440 with which the plan 450 is intended for use. For example, the workpiece data may represent the physical dimensions of the workpiece 440, the material type of the workpiece 440, any surface ornamentation, patterning, or colour of the workpiece.

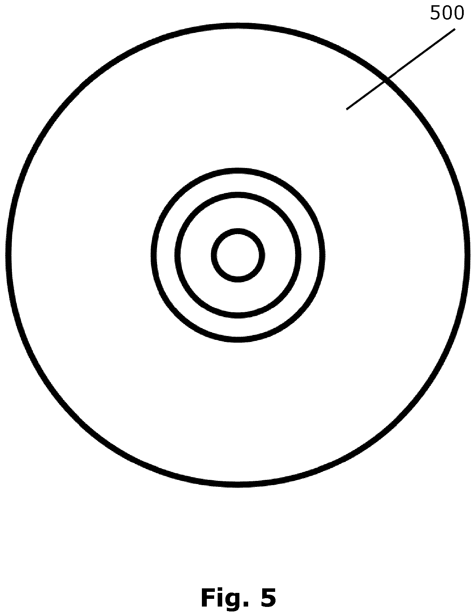

Figure 5 shows a non-transitory computer-readable storage medium 500 containing instructions that, when executed by a processor, cause the processor to perform an exemplary method according to the invention. The storage medium 500 may be storage a magnetic disk, optical disk, flash memory, or other memory device.

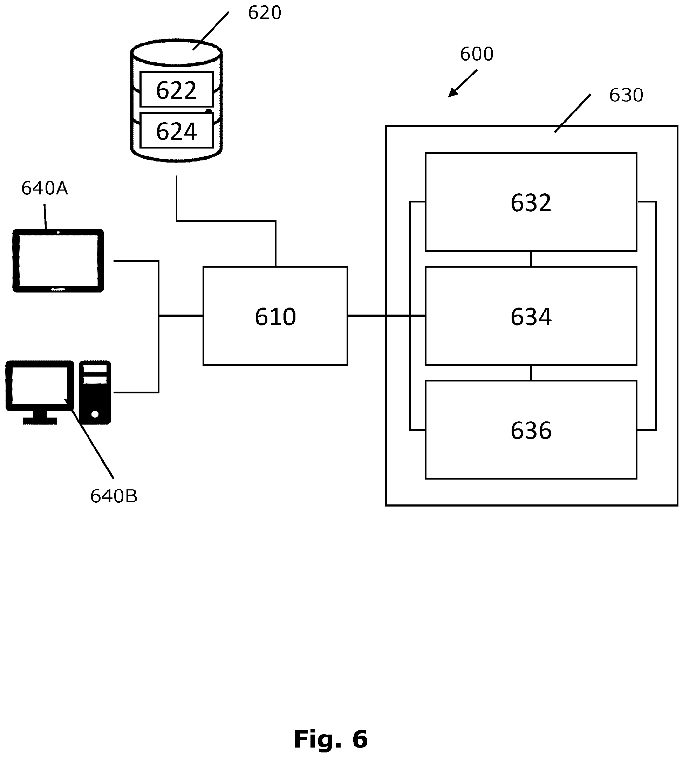

Figure 6 shows an exemplary system 600 for preparing a manufacturing plan. The system 600 may be used to implement the previously described method 100. The system comprises a receiver 610. The receiver 610 is configured to receive plan template data 624 defining a plan template and pattern data 624 defining a plurality of patterns, which may be stored on a storage medium 620. The receiver 610 provides data to and from a processor 630.

The receiver 610 may also be configured to send and receive instructions from user display/interface devices 640A, 640B. These devices 640A, 640B allow designers and other users to view and edit pattern data, and/or approve or further modify pattern adjustment recommendations.

In some cases, the receiver 610 may provide a direct physical connection between the processor 630, storage medium 620, and user display/interface devices 630A, 630B. In other examples, the receiver 610 may comprise one or more network adapters, allowing the processor 630 to send and receive data over a network such as the Cloud. A plan generator 632, plan evaluator 634, and recommendation generator are implemented as engines within the processor 610. The processor 610 may be configured to implement instructions received from a non-transitory storage medium, such as the storage medium 500.

The plan generator 632 processes the plan template data 622 and pattern data 624 to generate initial plan data, the initial plan data defining a pattern arrangement on the plan template. The plan generator may also process plan template date 622 and modified pattern data generated by the recommendation generator 636 in order to generate modified plan data, wherein the modified plan data may define a modified arrangement of modified patterns on the plan template.

The plan evaluator 634 generates plan efficiency scores for pattern arrangements generated by the plan generator 632. The plan evaluator 634 may evaluate both initial and modified pattern arrangements, to determine whether and how much improvement a modified pattern arrangement provides.

The recommendation generator 636 generates a pattern adjustment recommendation for modifying the pattern data by reference to the initial plan data and the plan efficiency score. The recommendation generator 636 may also process the pattern adjustment recommendation to generate modified pattern data, which can then be passed back to the plan generator 632.

## Claims

1. A computer-implemented method (100) for preparing a manufacturing plan, comprising:
receiving (102) plan template data defining a plan template;
receiving (104) pattern data defining a plurality of patterns;
processing the plan template data and pattern data to generate (106) initial plan data, the initial plan data defining an initial pattern arrangement on the plan template;
generating (108) a plan efficiency score based on the initial plan arrangement; and
generating (110) a pattern adjustment recommendation for modifying the pattern data by reference to the initial plan data and the plan efficiency score.

2. The method of claim 1, wherein generating the plan efficiency score and pattern adjustment recommendation comprises:
identifying an improvement region in the initial pattern arrangement; and
generating the pattern adjustment recommendation by reference to the identified improvement region.

3. The method of claim 2, wherein identifying an improvement region comprises identifying an overlap region between adjacent patterns in the arrangement.

4. The method of claims 2 or 3, wherein identifying an improvement region comprises identifying a waste region between adjacent patterns in the arrangement.

5. The method of any of claims 2 to 4, wherein the pattern adjustment recommendation modifies the pattern data so as to modify a size of the improvement region, and optionally to reduce the size of the improvement region.

6. The method of any preceding claim, wherein the pattern adjustment recommendation comprises a recommendation for modifying geometry of a pattern defined by the pattern data.

7. The method of any preceding claim, wherein the pattern data comprises:
geometry data representing geometrical features of each of the plurality of patterns; and
adjustability parameters representing an adjustability level of each of the geometrical features, and
wherein the pattern adjustment recommendation is generated with reference to the adjustability parameters.

8. The method of claim 7, wherein the adjustability parameters categorise geometrical features as fixed or unfixed, and the pattern adjustment recommendation comprises a recommendation for modifying an unfixed geometrical feature.

9. The method of any preceding claim, further comprising:
modifying (112) the pattern data in accordance with the pattern adjustment recommendation;
processing the plan template data and modified pattern data to generate (114) modified plan data, the modified plan data defining a modified pattern arrangement on the plan template.

10. The method of any preceding claim, further comprising generating display instructions for causing the pattern adjustment recommendation to be displayed on a display device, and optionally for causing the pattern adjustment recommendation to be displayed overlaid over the pattern arrangement according to the initial plan data.

11. The method of any preceding claim, wherein the plan is for guiding manufacturing operations onto a workpiece, and the plan template data comprises workpiece data representing material properties of the workpiece.

12. The method of any preceding claim, further comprising:
receiving an efficiency target; and
generating the pattern adjustment recommendation for modifying the pattern data by reference to the plan efficiency score and the efficiency target.

13. A non-transitory computer-readable storage medium (500) containing instructions that, when executed by a processor, cause the processor to perform the method of any preceding claim.

14. A data processing apparatus comprising a processor (630) configured to receive instructions from the storage medium of claim 13.

15. A system (600) for preparing a manufacturing plan, comprising:
a receiver (610) for receiving plan template data defining a plan template and pattern data defining a plurality of patterns;
a plan generator (632) for processing the plan template data and pattern data to generate initial plan data, the initial plan data defining a pattern arrangement on the plan template;
a plan evaluator (634) for generating a plan efficiency score based on the initial pattern arrangement; and
a recommendation generator (636) for generating a pattern adjustment recommendation for modifying the pattern data by reference to the plan efficiency score.
